# FASCICULE DE BREVET EUROPEEN

(11) **EP 3 520 204 B1**
(45) Date de publication et mention de la délivrance du brevet: **07.12.2022**
(21) Numéro de dépôt: 17787494.8
(22) Date de dépôt: 28.09.2017
(51) Int. Cl.: H02K 7/116, H02K 11/215, H02K 11/38, F02D 11/10

(54) **MOTOREDUCTEUR PRÉSENTANT UN CAPTEUR DE POSITION ENTOURANT LA ROUE DE SORTIE**
GETRIEBEMOTOREINHEIT MIT EINEM POSITIONSSENSOR UM DAS ABTRIEBRITZEL HERUM
GEARED MOTOR UNIT HAVING A POSITION SENSOR SURROUNDING THE OUTPUT GEAR

(30) Priorité: 28.09.2016 FR 1659159
(43) Date de publication de la demande: 07.08.2019
(73) Titulaire: Moving Magnet Technologies, 25000 Besançon (FR)
(72) Inventeur: WATRIN, Mathieu, 2300 La Chaux-De-Fonds (CH); ADLER, Christophe, 2735 Malleray (CH); LAFORGE, Damien, 25410 Dannemarie-Sur-Crete (FR); ANDRIEUX, Gaël, 2533 Evilard (CH)
(74) Mandataire: IP Trust
(86) Numéro de dépôt international: PCT/FR2017/052639
(87) Numéro de publication internationale: WO 2018/060630

(56) Documents cités:
- EP-A2- 1 217 192
- WO-A1-2015/019169
- WO-A1-2015/115029
- DE-B3- 10 262 404
- DE-U1-202016 000 143
- FR-A1- 2 896 025
- US-A1- 2011 016 960
- US-A1- 2014 298 939

## Description

### Domaine de l'invention

La présente invention concerne le domaine des motoréducteurs, et plus particulièrement des motoréducteurs destinés à des applications automobiles, impliquant une grande robustesse et une conception limitant la maintenance et l'encombrement.

De tels motoréducteurs comprennent habituellement une partie électromagnétique, avec un rotor à aimant permanent et un stator bobiné, commandé par un circuit électronique. Un capteur magnétique fournit un signal exploité par le circuit électronique pour assurer l'asservissement de la partie électromagnétique.

Un train d'engrenages transmet le mouvement du rotor à un axe de sortie.

### Etat de la technique

On connaît en particulier dans l'état de la technique un motoréducteur destiné à la commande de soupape décrit dans la demande de brevet européen EP1217192. Ce document de l'art antérieur décrit un moteur commandant des grilles de connexion par l'intermédiaire d'un système d'engrenages. Un capteur magnétique est prévu en face de l'extrémité de l'axe de sortie, qui comprend un aimant en bout d'axe associé à des concentrateurs de flux.

On connaît aussi la demande de brevet WO2015019169 concernant un système d'éjection pour des distributeurs automatiques distribuant des articles qui peuvent être achetés à un distributeur automatique. Plus particulièrement, ce document concerne une solution de fabrication de moteurs radiocommandés qui ne nécessitent pas la présence d'un microrupteur.

La demande de brevet DE202016000143 décrit un dispositif d'entraînement et consiste en un boîtier dans lequel est formé un espace intérieur. Un couvercle est monté sur le dessus du boîtier. Un appareil de transmission est installé à l'intérieur et se compose d'un moteur pas à pas et d'un réducteur constitué d'une pluralité d'engrenages engrenant les uns avec les autres dans différents rapports des engrenages. Le réducteur, qui est relié à un objet, est entraîné par le moteur pas à pas. Une carte de circuit imprimé est installée à l'intérieur et connectée au dispositif de transmission. Le moteur pas à pas est alimenté par le circuit imprimé, la vitesse du moteur pas à pas étant également contrôlée par le circuit imprimé.

Le brevet FR2896025 décrit une vanne comporte un servo-actionneur électromagnétique et un tube obturable formé d'une seule pièce commune en matière plastique. Une vanne de fermeture est disposée sur un axe d'un moteur couple du servo-actionneur lors de l'assemblage d'un rotor dans des pôles statoriques en matière plastique par exemple en polymère à cristaux liquides. Le rotor est pivoté à l'intérieur du moteur par un palier et une butée axiale. Une culasse ferromagnétique est reliée à l'axe du moteur. Un couvercle surmoule une connexion alimentant le moteur, et une sonde d'un capteur de position angulaire.

### Inconvénients de l'art antérieur

La solution proposée par la demande de brevet EP1217192 n'est pas satisfaisante pour plusieurs raisons.

En premier lieu, l'architecture électromécanique présente un encombrement important, ne permettant pas une réalisation compacte.

En second lieu, le raccordement des différents composants électriques nécessite le recours à une connectique, source de défaillances.

En troisième lieu, cette solution est incompatible avec une application nécessitant un axe creux traversant.

Enfin, cette réalisation implique de prolonger l'axe de sortie pour permettre le positionnement de l'aimant, après le guidage de l'axe.

### Solution apportée par l'invention

L'invention vise à résoudre ces inconvénients en proposant une solution très compacte et robuste, permettant de réduire significativement la connectique.

L'un des buts de l'invention est de réduire au maximum les problèmes de fiabilité résultant du raccordement électrique des différents composants d'un motoréducteur, et notamment le raccordement des bobines avec le circuit de pilotage, le raccordement du capteur de position avec ce circuit de pilotage et la liaison avec le connecteur du motoréducteur. Le but est de réduire les risques de défaillances et aussi de simplifier l'assemblage, pour une production industrielle en grandes séries.

Un autre but est d'améliorer la compacité, en optimisant le positionnement des principaux composants du motoréducteur, à savoir l'actionneur électromagnétique, le train d'engrenages et le circuit électronique et en réduisant au minimum les espaces non utilisés.

Un autre but est d'assurer une tenue mécanique et un guidage optimal du train d'engrenages et surtout de l'axe de sortie, par une parfaite précision et robustesse mécanique de l'entraînement, même lorsque le motoréducteur est soumis à des efforts importants.

Un but optionnel est de permettre une réalisation avec un axe de sortie traversant.

Afin de pouvoir réaliser un ensemble compact et intégré pouvant être utilisé dans un contexte industriel, un autre des objets de l'invention est de pouvoir former un ensemble intégrant une fonction telle qu'un corps de vanne en formant une tubulure intégrale avec le boitier du motoréducteur.

A cet effet, l'invention concerne selon son acception la plus générale un motoréducteur tel que défini dans l'ensemble des revendications joint.

De façon à former un ensemble intégré, ledit boîtier peut intégrer une tubulure obstruée par un volet mobile solidaire et commandé par la roue de sortie dentée. Les carters du boitier intègrent alors directement cette tubulure (obtenu par moulage d'une matière plastique ou métallique par exemple).

L'invention pourra être appliquée avantageusement à une vanne de climatisation comportant un volet rotatif actionné par l'axe de la roue dentée de sortie du motoréducteur, ou bien à un obturateur d'air comprenant au moins un volet mobile actionné par l'axe de la roue dentée de sortie du motoréducteur, ou bien à un corps de papillon pour admission d'air pour automobile comprenant au moins un volet mobile actionné par l'axe de la roue dentée de sortie du motoréducteur, ou bien encore une soupape de décharge pour turbocompresseur comprenant au moins un levier mobile actionné par l'axe de la roue dentée de sortie du motoréducteur. Le pilotage de vannes d'eau, type thermostat, est particulièrement adressé par cette invention.

### Brève description des figures

La présente invention sera mieux comprise à la lecture de la description détaillée d'un exemple non limitatif de l'invention qui suit, se référant aux dessins annexés où :
- les figures 1a, 1b, 1c et 1d représentent un premier mode de réalisation d'un motoréducteur selon l'invention selon des vues, respectivement, éclatée en vue de perspective avant, éclatée en vue de perspective arrière, de dessus, sans carter supérieur, de coupe longitudinale,
- les figures 2a, 2b et 2c représentent un deuxième mode de réalisation d'un motoréducteur selon l'invention selon des vues, respectivement, éclatée en vue de perspective arrière, de dessus sans carter supérieur, de coupe longitudinale,
- les figures 3a et 3b représentent un troisième mode de réalisation d'un motoréducteur selon l'invention selon des vues, respectivement, de dessus sans carter supérieur, de coupe longitudinale.
- la figure 4a représentent un quatrième mode de réalisation d'un motoréducteur selon l'invention intégrant un corps de vanne papillon pour admission d'air automobile, selon des vues, respectivement, en perspective avant et en coupe longitudinale.

### Description détaillée d'un exemple non limitatif de l'invention

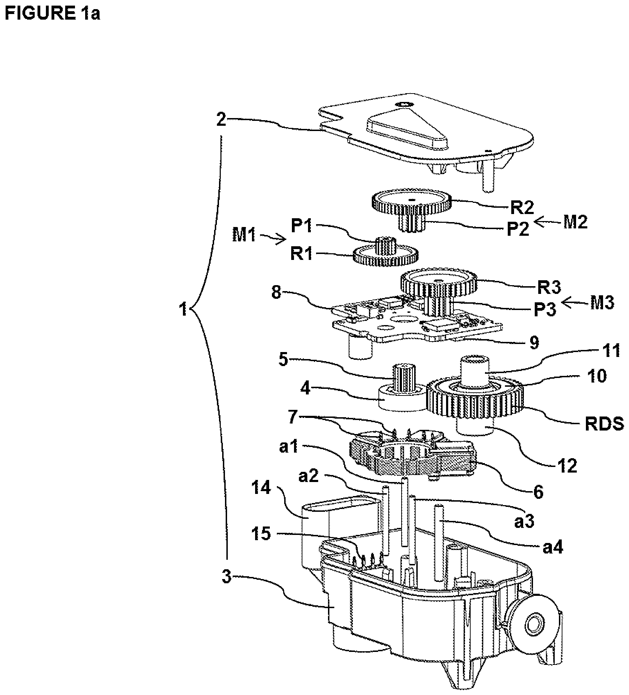

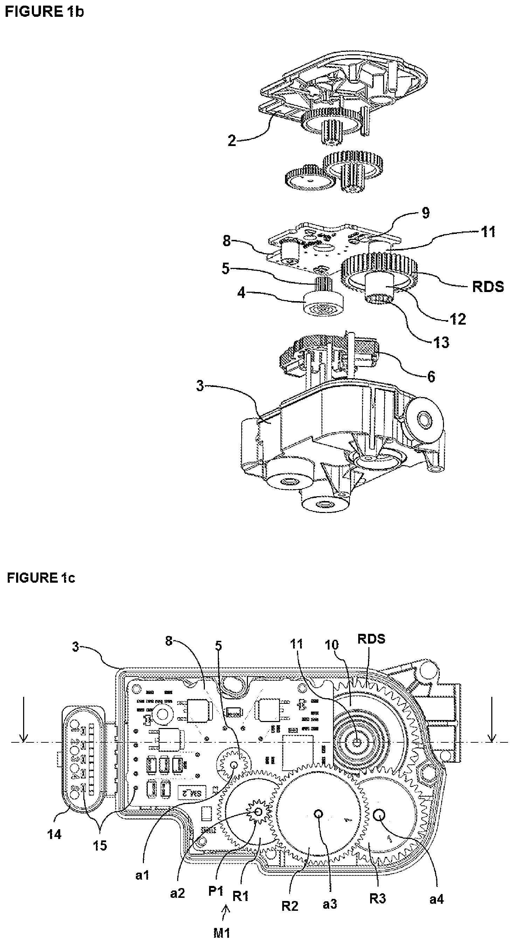

Les figures 1a à 1d représentent un premier exemple typique de l'invention. Le motoréducteur est composé d'un boitier (1) formé par l'assemblage d'un carter supérieur (2) et inférieur (3) dans lequel on retrouve un moteur constitué d'un ensemble statorique bobiné (6) qui coopère magnétiquement avec un rotor (4) composé d'une ou plusieurs paires de pôles aimantés. Ce rotor (4) est guidé en rotation par un axe d'entrée (a1) et est prolongé par un pignon (5) qui engrène avec un train d'engrenages formant un réducteur mécanique de mouvement réduisant la course mécanique et multipliant l'effort en sortie de ce train. La position de la roue de sortie dentée (RDS) de ce train d'engrenages est connue au moyen d'un capteur magnétique composé d'une sonde magnéto-sensible (9) et d'un aimant (10).

Un unique circuit imprimé (8) permet l'alimentation et le pilotage du moteur ainsi que la connaissance de la position de sortie via la sonde magnéto sensible (9) placée sur ce même circuit. L'ensemble statorique bobiné (6) est alimenté au moyen de pattes de connexion (7) disposées perpendiculairement par rapport au plan du circuit (8) et qui lui sont reliées mécaniquement et électriquement. Dans un autre mode de réalisation (non illustré) on peut directement venir connecter les fils des bobines au circuit. L'alimentation électrique et la communication avec l'environnement extérieur sont réalisées au moyen d'un connecteur (14) dont les pattes de connexion (15) traversent le carter (3) pour recevoir du côté extérieur le contre-connecteur de l'utilisateur et du coté intérieur être relié électriquement et mécaniquement au circuit imprimé.

La figure 1c permet de voir la disposition du train d'engrenages ici composé de quatre étages de réduction, le nombre d'étages n'étant pas limitatif. Ces étages sont formés d'ensembles pignon/roue denté portés par les axes de guidage a1, a2, a3 et a4. La roue de sortie dentée (RDS) est guidée par deux axes de guidage (11) ,(12), ces éléments (RDS, 11, 12) formant ici une seule et même pièce, mais il peut être envisagé de rapporter les axes de guidages sur la roue de sortie dentée (non illustré).

L'axe a2 porte le mobile M1 formé d'une roue dentée R1 qui engrène avec le pignon d'entrée dentée (5) formant le premier étage de réduction.

L'axe a3 porte le mobile M2 formé d'un pignon denté P2 et d'une roue dentée R2 qui engrène avec le pignon denté P1 formant le deuxième étage de réduction. Les mobiles M1 et M2 sont disposés tête-bêche, les pignons P1 et P2 s'étendant axialement dans une direction opposée de manière à limiter la hauteur du motoréducteur, la roue R2 n'étant pas plus haute que le pignon P1.

L'axe a4 porte le mobile M3 formé d'un pignon denté P3 et d'une roue dentée R3 qui engrène avec le pignon denté P2 formant le troisième étage de réduction.

Enfin, la roue dentée de sortie (RDS) engrène avec le pignon denté P3 formant le quatrième étage de réduction.

A noter que ces différents étages de liaison peuvent aussi bien être selon un rapport de réduction unitaire que non unitaire.

Les mobiles M1 et M2 sont disposés du côté opposé au circuit (8) par rapport à l'ensemble statorique (6), le pignon (5) et son axe a1 traversant le circuit, de même que l'axe a2. Puis le mobile M3 et la roue de sortie (RDS) redescendent au niveau de l'ensemble statorique (6) afin de proposer un motoréducteur compact suivant la direction de l'axe de sortie. La disposition des différents engrenages n'est cependant pas limitative à cette réalisation, par exemple les engrenages peuvent être disposés partiellement ou totalement sous l'ensemble statorique et les axes de guidage comporter plusieurs mobiles roue/pignon (non illustrés).

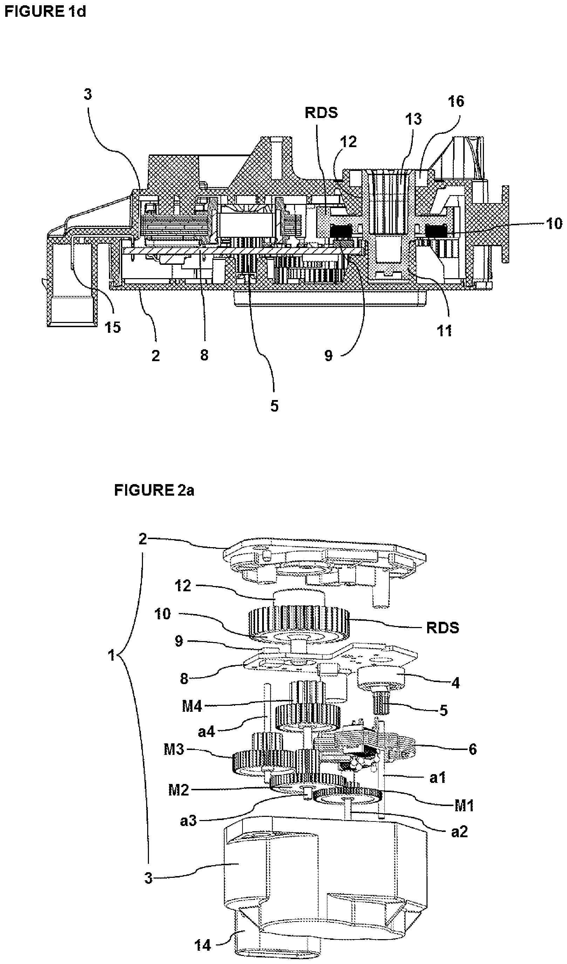

La figure 1d permet de mieux visualiser le guidage de la roue de sortie (RDS) et la réalisation du capteur de position.

Un accouplement (13) permet de relier un organe extérieur quelconque à déplacer (non montré). La RDS étant creuse et affleurante au boitier, l'accouplement (13) prend place à l'intérieur de la RDS afin d'être connectée facilement et rendre l'actionneur plus compact. Toutefois ce type de liaison n'est pas limitatif, la liaison peut par exemple être facilement rendue traversante, ou se faire à l'extérieur du boitier si les axes (12) et/ou (11) sont prolongés.

Le guidage de la RDS est réalisé de part et d'autre du circuit imprimé (8) au moyen des formes (11), (12) qui glissent dans le carter inférieur (3) et supérieur (2) formant le boitier du motoréducteur. La qualité du guidage ainsi que sa résistance aux efforts créés par les engrenages ou l'organe extérieur est ainsi amélioré et sa simplicité limite le coût de réalisation. Toutefois ce type de guidage n'est pas limitatif et l'emploi d'éléments de guidage intermédiaire utilisant par exemple des roulements ou des paliers lisses est possible (non montré). Un joint (16) placé autour de la forme (12) de guidage qui glisse dans le carter inférieur (3) peut réaliser l'étanchéité du motoréducteur avec l'environnement extérieur.

L'emploi d'un capteur utilisant un aimant bout d'axe n'est alors plus possible sans ajouter de coûteuses complications telle que l'emploi d'un second circuit imprimé.

Un aimant capteur annulaire (10) est ici disposé autour de l'axe de la roue dentée de sortie (RDS) et solidaire de cette dernière. Afin de limiter l'encombrement, l'aimant capteur (10) est avantageusement intégré dans la roue dentée de sortie (RDS) mais son positionnement n'est pas limité à cet exemple, il peut par exemple prendre place autour des axes de guidage (11), (12) (non montré). De même, l'aimant capteur (10) peut être sous la forme d'un secteur angulaire s'étendant sur un angle inférieur à 360°.

La sonde magnéto-sensible (9) est placée sur le circuit imprimé (8), ici axialement en regard de l'aimant capteur (10) afin de capter une variation de l'angle magnétique ou de l'amplitude du champ magnétique généré par l'aimant capteur (10). La position de la sonde (9) sur le circuit imprimé (8), par rapport à l'aimant capteur (10), n'est pas limitative et peut varier suivant le type d'aimantation, d'aimant et de sonde. Par exemple, la sonde peut se trouver radialement en regard de l'aimant ou décalée axialement et radialement (non montré).

L'aimant (10) peut être fixé de différente manière à la roue de sortie (RDS) ou aux axes de sortie. De manière non exhaustive, il peut être fixé par collage, rivetage, interférence, vissage ou surmoulage. Suivant le type d'aimant il peut encore être directement injecté. L'aimantation peut être réalisé avant ou après assemblage avec la RDS, ou encore au cours de l'injection.

La figure 2a présente un second mode de réalisation de l'invention. On retrouve en entrée du motoréducteur un moteur électrique constitué d'un ensemble statorique (6) bobiné qui coopère magnétiquement avec un rotor (4) composé d'une ou plusieurs paires de pôles aimantés. Ce rotor (4) est porté par un axe d'entrée (a1) et est prolongé par un pignon d'entrée (5) qui engrène avec un train d'engrenages formant un réducteur mécanique de mouvement, réduisant la course mécanique et multipliant l'effort en sortie de ce train.

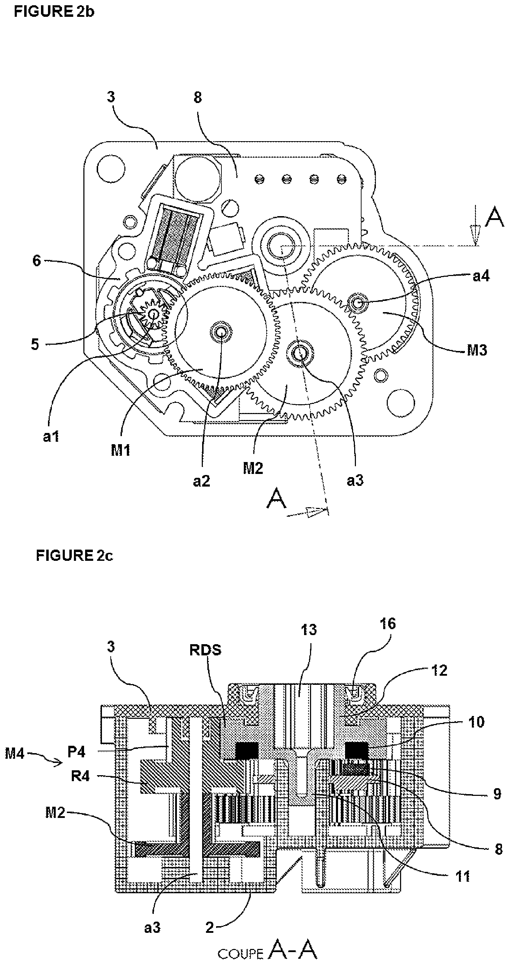

A la différence du premier exemple, le train d'engrenages commence à s'étendre sous l'ensemble statorique (6) et le circuit imprimé (8). La figure 2b permet de mieux distinguer le pignon d'entrée (5) porté par l'axe (a1) et les mobiles (M1), (M2) et (M3) composés de couple pignon/roue dentés formant les trois premiers étages de réduction et portés respectivement par les axes (a2), (a3) et (a4).

Une autre particularité de ce motoréducteur est de comporter cinq étages de réduction sans utiliser de formes de guidage supplémentaire par rapport au premier exemple comportant quatre étages de réduction. Le figure 2c présente une vue en coupe permettant de bien visualiser cette réalisation. Pour ce faire, l'axe (a3) porte deux mobiles superposés (M2) et (M4). Le pignon denté du mobile (M3) engrène avec la roue dentée (R4) du mobile (M4) pour former le quatrième étage de réduction. Cette solution est avantageuse économiquement et permet une bonne compacité.

Enfin la roue dentée de sortie (RDS) engrène avec le pignon denté P4 formant le cinquième étage de réduction. Ce dernier étage prend place au-dessus du circuit imprimé (8). Contrairement au premier mode de réalisation l'accouplement (13) est donc situé du même côté que le circuit imprimé (8).

Le guidage de la (RDS) est réalisé de part et d'autre du circuit imprimé (8) au moyen des guidages (11), (12) qui glissent dans le carter inférieur (3) et supérieur (2) formant le boitier du motoréducteur.

La sonde magnéto-sensible (9) est placée sur le circuit imprimé (8), ici axialement en regard de l'aimant capteur (10) afin de capter une variation de l'angle magnétique ou de l'amplitude du champ magnétique généré par l'aimant capteur (10).

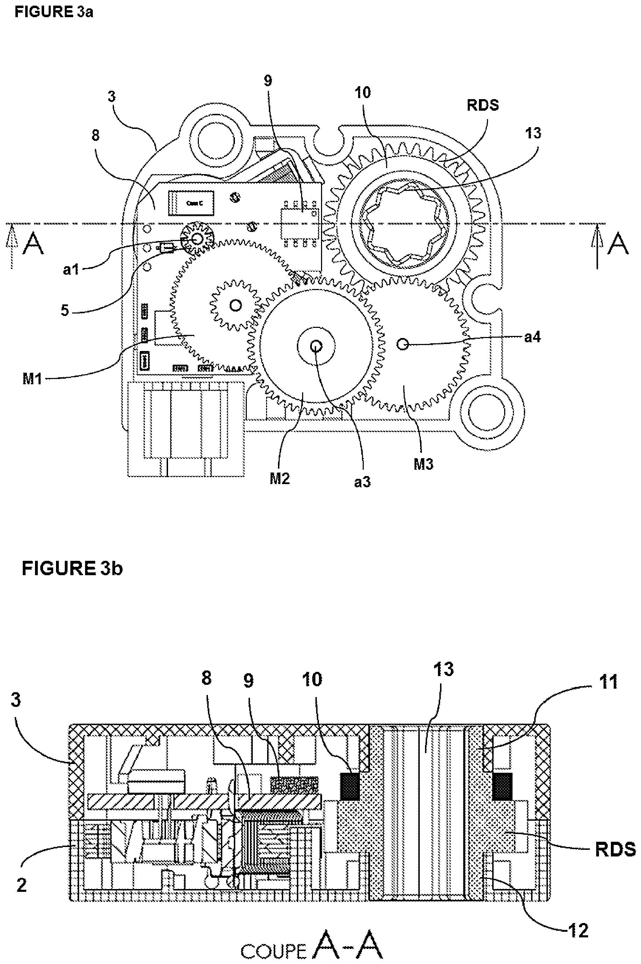

La figure 3a présente un troisième mode de réalisation de l'invention. Le motoréducteur est composé de six étages de réduction.

Les trois premiers étages sont réalisés de manière similaire au premier mode de réalisation par l'intermédiaire du pignon denté (5) porté par l'axe (a1) et des mobiles (M1) et (M2) portés par les axes (a2) et (a3).

De la même manière que dans le second mode de réalisation les étages quatre et cinq sont réalisés grâce à deux mobiles supplémentaires (M4) et (M5) (non montrés) situés respectivement sous le mobile (M2)et (M3) et guidés par les axes (a3) et (a4).

Enfin la roue dentée de sortie (RDS) engrène avec le pignon denté du mobile (M5) formant le sixième étage de réduction.

Ainsi ce motoréducteur propose une empreinte réduite et une faible épaisseur.

La figure 3b montre une vue en coupe de l'actionneur permettant de mieux visualiser le guidage de la RDS et la réalisation du capteur de position.

Une des particularités du mode de réalisation est de proposer un accouplement (13) creux et traversant de sorte que l'organe extérieur à déplacer peut-être monté indifféremment d'un côté ou de l'autre du motoréducteur. Cela rend également impossible l'emploi d'un capteur de type bout d'axe.

Le guidage de la (RDS) est réalisé de part et d'autre du circuit imprimé (8) au moyen des guidages (11), (12) qui glissent dans le carter inférieur (3) et supérieur (2) formant le boitier du motoréducteur.

L'implantation de la (RDS) et ses dimensions réduites ne permettent pas comme pour les deux premiers modes de réalisation l'implantation d'un aimant capteur (10) au sein de la (RDS) dentée, situé axialement en regard de la sonde magnéto-sensible (9). Ainsi l'aimant annulaire (10) prend ici place au-dessus de la (RDS) dentée, dans le prolongement de la forme (11). La sonde magnéto-sensible (9) montée sur le circuit imprimé (8) est ici positionnée radialement en regard de l'aimant capteur (10) afin de capter une variation de l'angle magnétique ou de l'amplitude du champ magnétique généré par l'aimant capteur (10).

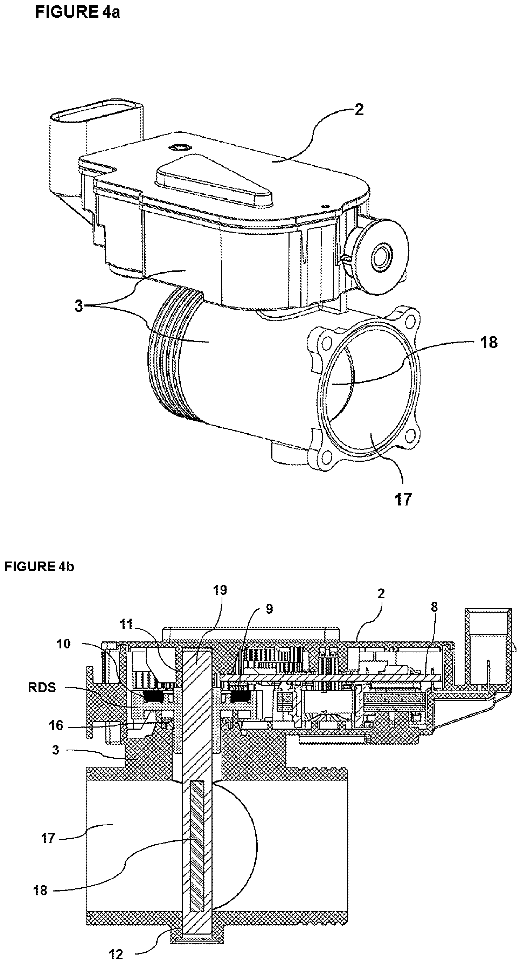

La figure 4a présente un quatrième mode de réalisation de l'invention dérivé du premier mode de réalisation. Le motoréducteur intègre ici directement une fonction plus évoluée, ici un corps de vanne (pour un volet de type « papillon ») pour admission d'air automobile.

Le boitier (1) est toujours composé d'un carter supérieur (2) et inférieur (3) mais le carter inférieur (3) intègre une tubulure (17), ici pour former un corps de vanne dites « papillon ». Le motoréducteur permet la gestion de l'admission d'air en actionnant le volet mobile (18).

La figure 4b montre une vue en coupe de l'actionneur permettant de détailler la construction de la sortie.

La roue de sortir dentée (RDS), qui intègre toujours avantageusement l'aimant capteur (10), est ici montée sur un axe de sortie (19). Le mode d'assemblage de la roue de sortie dentée (RDS) sur l'axe de sortie (19) n'est pas limitatif, elle peut par exemple être chassée, collée, sertie ou encore surmoulée.

L'axe de sortie (19) est guidé et glisse dans les formes (11), (12).

Le guidage de l'axe de sortie (19) est réalisé de part et d'autre du circuit imprimé (8) au moyen des formes (11), (12) qui glissent dans le carter inférieur (3) formant la tubulure (17) du corps de vanne et du carter supérieur (2). Toutefois, ce type de guidage n'est pas limitatif et l'emploi d'éléments de guidage intermédiaire utilisant par exemple des roulements ou des paliers lisses est possible (non montré). Un joint (16) placé autour de la roue de sortie dentée (RDS) ou de l'axe de sortie (non illustré) et du carter inférieur (3) peut réaliser l'étanchéité de la partie du motoréducteur avec la tubulure (17) du corps de vanne.

Un volet mobile (18) est monté sur l'axe de sortie (19).

## Revendications

1. - Motoréducteur constitué d'un boîtier (1) formé par l'assemblage d'un carter supérieur (2) et d'un carter inférieur (3), ledit boîtier comprenant un moteur électrique formé d'un ensemble statorique (6) bobiné et d'un rotor aimanté (4), ledit boitier (1) comprenant en outre un circuit imprimé (8) pour la connexion et le pilotage dudit moteur, un train d'engrenages réducteur de mouvement de rotation du rotor (4), un aimant de capteur (10) de position et une sonde magnéto-sensible (9), le train d'engrenages comprenant une roue dentée de sortie de mouvement (RDS) dudit mouvement du rotor (4), l'aimant de capteur (10) étant de forme annulaire et étant solidaire de ladite roue de sortie (RDS),
- ladite roue de sortie (RDS) étant axialement prolongée de part et d'autre de son axe de rotation et de l'aimant de capteur (10) par deux formes de guidage (11), (12) qui glissent dans le carter inférieur (3) et supérieur (2) , lesdits carters formant deux parois opposées du boîtier (1) dudit motoréducteur,
- ledit aimant annulaire (10) entourant l'axe de rotation de la roue de sortie (RDS),
- ledit circuit imprimé (8) comprenant les moyens de pilotage dudit moteur et s'étendant axialement ou radialement jusqu'au voisinage de la roue de sortie (RDS),
- ledit circuit imprimé (8) comportant, dans une zone située au voisinage de la roue de sortie (RDS), ladite sonde magnéto-sensible (9) montée directement, électriquement et mécaniquement, sur ladite zone et situé en regard, axialement ou radialement, dudit aimant annulaire (10).

2. - Motoréducteur selon la revendication 1 **caractérisé en ce que** la direction d'aimantation dudit aimant de capteur (10) présente au moins une composante variable angulairement.

3. - Motoréducteur selon la revendication 1 ou 2 **caractérisé en ce que** ledit rotor (4) est prolongé par un pignon (5) et **en ce que** ledit pignon (5) et la roue dentée de sortie (RDS) portant ledit aimant annulaire (10) sont situés de part et d'autre dudit circuit imprimé (8).

4. - Motoréducteur selon la revendication 3 **caractérisé en ce que** ladite sonde magnéto-sensible (9) est montée sur le circuit imprimé (8) sur la surface opposée à celle portant la majorité des autres composants électroniques nécessaire au pilotage dudit moteur électrique.

5. - Motoréducteur selon la revendication 1 **caractérisé en ce que** le train d'engrenages comprend des roues dentées intermédiaires (M1, M2, M3) situées d'un côté du circuit imprimé (8) et **en ce que** la roue dentée de sortie (RDS) est située du côté opposé dudit circuit imprimé (8).

6. - Motoréducteur selon la revendication 1 **caractérisé en ce que** le rotor (4) est prolongé par un pignon (5), d'un côté dudit circuit imprimé (8), ledit train d'engrenages présentant une série de roues dentées intermédiaires (M1, M2, M3) entraînant la roue dentée de sortie (RDS) placées du côté opposé dudit circuit imprimé (8).

7. - Motoréducteur selon la revendication 6 **caractérisé en ce qu'**il comporte un axe (a3) commun à deux roues dentées intermédiaires (M2, M4).

8. - Motoréducteur selon la revendication 6 **caractérisé en ce que** ledit circuit imprimé (8) est traversé par l'axe de la roue dentée de sortie (RDS).

9. - Motoréducteur selon la revendication 1 **caractérisé en ce que** ledit circuit imprimé (8) est traversé par l'axe (a1) du rotor (4).

10. - Motoréducteur selon la revendication 1 **caractérisé en ce que** ledit aimant permanent de capteur (10) présente une direction d'aimantation variable angulairement et une forme tubulaire, la sonde magnéto-sensible (9) étant placée en position radiale par rapport audit aimant de capteur (10).

11. - Motoréducteur selon l'une quelconque des revendications précédentes **caractérisé en ce que** l'axe de la roue dentée de sortie (RDS) est creux et traverse ledit boîtier (1).

12. - Motoréducteur selon l'une quelconque des revendications précédentes **caractérisé en ce que** lesdites formes de guidage (11), (12) de chacune des extrémités de l'axe de la roue dentée de sortie (RDS), sont situées de part et d'autre du circuit imprimé (8).

13. - Motoréducteur selon la revendication 1 **caractérisé en ce que** la roue dentée de sortie (RDS) est coaxiale avec le rotor (4).

14. - Motoréducteur selon l'une quelconque des revendications précédentes **caractérisé en ce que** ledit boîtier (1) intègre une tubulure (17) obstruée par un volet (18) mobile solidaire et commandé par la roue de sortie dentée (RDS).

15. - Ensemble comprenant un motoréducteur selon une des revendications 1 à 14 et une vanne de climatisation comportant un volet rotatif actionné par l'axe de la roue dentée de sortie (RDS).

16. - Ensemble comprenant un motoréducteur selon une des revendications 1 à 14 et un obturateur d'air comprenant au moins un volet mobile **caractérisé en ce que** ledit volet mobile est actionné par l'axe de la roue dentée de sortie (RDS).

17. - Ensemble comprenant un motoréducteur selon une des revendications 1 à 14 et un corps de papillon pour admission d'air pour automobile comprenant au moins un volet mobile **caractérisé en ce que** ledit volet mobile est actionné par l'axe de la roue dentée de sortie (RDS).

18. - Ensemble comprenant un motoréducteur selon une des revendications 1 à 14 et une soupape de décharge pour turbocompresseur comprenant au moins un levier mobile actionné par l'axe de la roue dentée de sortie (RDS).

## Patentansprüche

1. Getriebemotor, bestehend aus einem Gehäuse (1), das durch das Zusammenbauen eines oberen Gehäuseteils (2) und eines unteren Gehäuseteils (3) gebildet wird, das Gehäuse umfassend einen Elektromotor, der aus einer gewickelten Statorbaugruppe (6) und aus einem magnetisierten Rotor (4) gebildet ist, das Gehäuse (1) ferner umfassend eine gedruckte Schaltung (8) zum Verbinden und Steuern des Motors, ein die Rotationsbewegung des Rotors (4) untersetzendes Zahnradgetriebe, einen Positionssensormagneten (10) und eine magnetisch beeinflussbare Sonde (9), das Zahnradgetriebe umfassend ein Bewegungsabtriebszahnrad (RDS) der Bewegung des Rotors (4), wobei der Sensormagnet (10) ringförmig und mit dem Abtriebsrad (RDS) fest verbunden ist,
- wobei das Abtriebsrad (RDS) auf beiden Seiten seiner Drehwelle und des Sensormagneten (10) durch zwei Führungsformen (11), (12) axial verlängert ist, die in dem unteren (3) und dem oberen Gehäuseteil (2) gleiten, wobei die Gehäuseteile zwei einander gegenüberliegende Wände des Gehäuses (1) des Getriebemotors bilden,
- wobei der ringförmige Magnet (10) die Drehwelle des Abtriebsrads (RDS) umgibt,
- wobei die gedruckte Schaltung (8) die Mittel zum Steuern des Motors umfasst und sich axial oder radial bis in die Nähe des Abtriebsrads (RDS) erstreckt,
- wobei die gedruckte Schaltung (8) in einem Bereich, der sich in der Nähe des Abtriebsrads (RDS) befindet, die magnetisch beeinflussbare Sonde (9) aufweist, die elektrisch und mechanisch direkt an dem Bereich angebracht ist und sich axial oder radial gegenüber dem ringförmigen Magneten (10) befindet.

2. Getriebemotor nach Anspruch 1, **dadurch gekennzeichnet, dass** die Magnetisierungsrichtung des Sensormagneten (10) mindestens eine winkelveränderliche Komponente aufweist.

3. Getriebemotor nach Anspruch 1 oder 2, **dadurch gekennzeichnet, dass** der Rotor (4) durch ein Ritzel (5) verlängert ist und dass das Ritzel (5) und das Abtriebszahnrad (RDS), das den ringförmigen Magneten (10) trägt, sich auf beiden Seiten der gedruckten Schaltung (8) befinden.

4. Getriebemotor nach Anspruch 3, **dadurch gekennzeichnet, dass** die magnetisch beeinflussbare Sonde (9) auf der gedruckten Schaltung (8) auf der Oberfläche angebracht ist, die derjenigen gegenüberliegt, die die Mehrheit der anderen elektronischen Komponenten trägt, die für das Steuern des Elektromotors erforderlich sind.

5. Getriebemotor nach Anspruch 1, **dadurch gekennzeichnet, dass** der Zahnradgetriebe Zwischenzahnräder (M1, M2, M3) umfasst, die sich auf einer Seite der gedruckten Schaltung (8) befinden, und dass sich das Abtriebszahnrad (RDS) auf der gegenüberliegenden Seite der gedruckten Schaltung (8) befindet.

6. Getriebemotor nach Anspruch 1, **dadurch gekennzeichnet, dass** der Rotor (4) auf einer Seite der gedruckten Schaltung (8) durch ein Ritzel (5) verlängert ist, wobei der Zahnradgetriebe eine Reihe von Zwischenzahnrädern (M1, M2, M3) aufweist, die das Abtriebszahnrad (RDS) antreiben und die auf der Seite gegenüber der gedruckten Schaltung (8) angeordnet sind.

7. Getriebemotor nach Anspruch 6, **dadurch gekennzeichnet, dass** er eine Welle (a3) aufweist, die zwei Zwischenzahnrädern (M2, M4) gemeinsam ist.

8. Getriebemotor nach Anspruch 6, **dadurch gekennzeichnet, dass** die gedruckte Schaltung (8) von der Welle des Abtriebszahnrads (RDS) durchsetzt wird.

9. Getriebemotor nach Anspruch 1, **dadurch gekennzeichnet, dass** die gedruckte Schaltung (8) von der Welle (a1) des Rotors (4) durchsetzt wird.

10. Getriebemotor nach Anspruch 1, **dadurch gekennzeichnet, dass** der Sensordauermagnet (10) eine winkelveränderliche Magnetisierungsrichtung und eine rohrförmige Form vorweist, wobei die magnetisch beeinflussbare Sonde (9) in einer radialen Position in Bezug auf den Sensormagneten (10) angeordnet ist.

11. Getriebemotor nach einem der vorstehenden Ansprüche, **dadurch gekennzeichnet, dass** die Welle des Abtriebszahnrads (RDS) hohl ist und das Gehäuse (1) durchsetzt.

12. Getriebemotor nach einem der vorstehenden Ansprüche, **dadurch gekennzeichnet, dass** die Führungsformen (11), (12) jedes der Enden der Welle des Abtriebszahnrads (RDS) sich auf beiden Seiten der gedruckten Schaltung (8) befindet.

13. Getriebemotor nach Anspruch 1, **dadurch gekennzeichnet, dass** das Abtriebszahnrad (RDS) koaxial zu dem Rotor (4) ist.

14. Getriebemotor nach einem der vorstehenden Ansprüche, **dadurch gekennzeichnet, dass** das Gehäuse (1) einen Rohransatz (17) beinhaltet, der durch eine bewegbare Klappe (18) versperrt ist, die fest verbunden ist und durch das Abtriebsrad (RDS) geregelt wird.

15. Baugruppe, umfassend einen Getriebemotor nach einem der Ansprüche 1 bis 14 und ein Klimaanlagenventil, das eine sich drehende Klappe aufweist, die durch die Welle des Abtriebszahnrads (RDS) angetrieben wird.

16. Baugruppe, umfassend einen Getriebemotor nach einem der Ansprüche 1 bis 14 und ein Luftabsperrelement, umfassend mindestens eine bewegbare Klappe, **dadurch gekennzeichnet, dass** die bewegbare Klappe durch die Welle des Abtriebszahnrads (RDS) angetrieben wird.

17. Baugruppe, umfassend einen Getriebemotor nach einem der Ansprüche 1 bis 14 und einen Drosselklappenstutzen für einen Lufteinlass für ein Kraftfahrzeug, umfassend mindestens eine bewegbare Klappe, **dadurch gekennzeichnet, dass** die bewegbare Klappe durch die Welle des Abtriebszahnrads (RDS) angetrieben wird.

18. Baugruppe, umfassend einen Getriebemotor nach einem der Ansprüche 1 bis 14 und ein Auslassventil für einen Turbolader, umfassend mindestens einen bewegbaren Hebel, der durch die Welle des Abtriebszahnrads (RDS) angetrieben wird.

## Claims

1. Gear motor consisting of a housing (1) which is formed by assembling an upper casing (2) and a lower casing (3), said housing comprising an electric motor consisting of a wound stator assembly (6) and a magnetized rotor (4), said housing (1) further comprising a printed circuit (8) for connecting and controlling said motor, a reduction gear train for rotationally moving the rotor (4), a position sensor magnet (10) and a magneto-sensitive probe (9), the gear train comprising a movement-output toothed wheel (RDS) that outputs said movement of the rotor (4), the sensor magnet (10) being annular and secured to said output wheel (RDS),
- said output wheel (RDS) being axially extended on either side of its axis of rotation and of the sensor magnet (10) by two forms of guide (11), (12) which slide in the lower (3) casing and upper (2) casing, said casings forming two opposite walls of the housing (1) of said gear motor,
- said annular magnet (10) surrounding the axis of rotation of the output wheel (RDS),
- said printed circuit (8) comprising the means for controlling said motor and extending axially or radially up to the vicinity of the output wheel (RDS),
- said printed circuit (8) comprising, in a region located in the vicinity of the output wheel (RDS), said magneto-sensitive probe (9) which is mounted directly, electrically and mechanically on said region and located axially or radially opposite said annular magnet (10).

2. Gear motor according to claim 1, **characterized in that** the direction of magnetization of said sensor magnet (10) has at least one angularly variable component.

3. Gear motor according to either claim 1 or claim 2, **characterized in that** said rotor (4) is extended by a pinion (5) and **in that** said pinion (5) and the toothed output wheel (RDS) which carries said annular magnet (10) are located on either side of said printed circuit (8).

4. Gear motor according to claim 3, **characterized in that** said magneto-sensitive probe (9) is mounted on the printed circuit (8) on the surface opposite that which carries the majority of the other electronic components necessary for controlling said electric motor.

5. Gear motor according to claim 1, **characterized in that** the gear train comprises intermediate toothed wheels (M1, M2, M3) located on one side of the printed circuit (8) and **in that** the toothed output wheel (RDS) is located on the opposite side of said printed circuit (8).

6. Gear motor according to claim 1, **characterized in that** the rotor (4) is extended by a pinion (5) on one side of said printed circuit (8), said gear train having a series of intermediate toothed wheels (M1, M2, M3) which drive the toothed output wheel (RDS) and are positioned on the opposite side of said printed circuit (8).

7. Gear motor according to claim 6, **characterized in that** it comprises a shaft (a3) which is common to two intermediate toothed wheels (M2, M4).

8. Gear motor according to claim 6, **characterized in that** said printed circuit (8) is passed through by the shaft of the toothed output wheel (RDS).

9. Gear motor according to claim 1, **characterized in that** said printed circuit (8) is passed through by the shaft (a1) of the rotor (4).

10. Gear motor according to claim 1, **characterized in that** said permanent sensor magnet (10) has an angularly variable direction of magnetization and a tubular shape, the magneto-sensitive probe (9) being positioned in a radial position with respect to said sensor magnet (10).

11. Gear motor according to any of the preceding claims, **characterized in that** the shaft of the toothed output wheel (RDS) is hollow and passes through said housing (1).

12. Gear motor according to any of the preceding claims, **characterized in that** said forms of guide (11), (12) of each of the ends of the shaft of the toothed output wheel (RDS) are located on either side of the printed circuit (8).

13. Gear motor according to claim 1, **characterized in that** the toothed output wheel (RDS) is coaxial with the rotor (4).

14. Gear motor according to any of the preceding claims, **characterized in that** said housing (1) contains a pipe (17) which is blocked off by a movable flap (18) which is secured to and controlled by the toothed output wheel (RDS).

15. Assembly comprising a gear motor according to any of claims 1 to 14 and an air conditioning valve that has a rotary flap which is actuated by the shaft of the toothed output wheel (RDS).

16. Assembly comprising a gear motor according to any of claims 1 to 14 and an air seal that has at least one movable flap, **characterized in that** said movable flap is actuated by the shaft of the toothed output wheel (RDS).

17. Assembly comprising a gear motor according to any of claims 1 to 14 and a throttle body for air intake for motor vehicles that has at least one movable flap, **characterized in that** said movable flap is actuated by the shaft of the toothed output wheel (RDS).

18. Assembly comprising a gear motor according to any of claims 1 to 14 and a relief valve for a turbocharger that has at least one movable lever which is actuated by the shaft of the toothed output wheel (RDS).
